# EUROPEAN PATENT SPECIFICATION

(11) **EP 3 193 062 B1**
(45) Date of publication and mention of the grant of the patent: **09.01.2019**
(21) Application number: 16151413.8
(22) Date of filing: 15.01.2016
(51) Int. Cl.: F16K 41/04, F16K 43/00, F16K 1/52, F24D 19/10, F16K 27/02, F16J 15/06

(54) **VALVE ARRANGEMENT AND INSERT FOR A VALVE ARRANGEMENT**
VENTILANORDNUNG UND EINSATZ FÜR EINE VENTILANORDNUNG
AGENCEMENT DE SOUPAPE ET INSERT POUR UN AGENCEMENT DE SOUPAPE

(43) Date of publication of application: 19.07.2017
(73) Proprietor: Danfoss A/S, 6430 Nordborg (DK)
(72) Inventor: Clausen, Anders Østergaard, 8680 Ry (DK); Hesseldahl, Søren, 7182 Bredsten (DK)
(74) Representative: Keil & Schaafhausen Patent- und Rechtsanwälte PartGmbB

(56) References cited:
- EP-A1- 2 818 960
- EP-A2- 1 193 432
- WO-A1-2014/138786
- DE-A1- 3 605 606
- FR-A1- 2 965 035

## Description

The present invention relates to a valve arrangement comprising a valve housing, a valve inlet, a valve outlet, a main valve element and a main valve seat, the main valve seat being arranged in a flow path between the valve inlet and the valve outlet and the main valve element cooperating with the main valve seat, the valve housing containing an insert which is of a circular cylindrical shape and comprises an insert inlet and a circumferential surface, the circumferential surface comprising an insert outlet, wherein an insert passage passing through the insert connects the insert inlet to the insert outlet, the gasket element being arranged on a radially outer side of the circumferential surface and cooperating with the valve housing, the insert comprising a gasket element so as to provide a fluid seal, wherein the gasket element comprises a gasket section being arranged slanted with respect to a direction of the axial extension of the insert, wherein the insert comprises an insert foot for stabilizing the insert in the valve housing, which foot is an axial end section of the circumferential surface. Such a valve arrangement is known, for example, from FR 2 965 035 A1 showing a valve in form of a pressure limiter. The valve comprises an insert separating an inlet and an outlet. The insert is sealed against the housing by means of a gasket element which is inclined to a central axis of the insert.

A similar valve in form of a pressure reducer valve is described in DE 36 05 606 A1. This valve comprises an insert having an inlet opening in a circumferential wall and an outlet opening at the bottom. These two openings are separated by a gasket element which is slanted.

A further valve arrangement is known, for example from DE 10 2013 010 433 A1.

Furthermore, the invention relates to an insert for a valve arrangement comprising a valve housing, a valve inlet, a valve outlet, a main valve element and a main valve seat, the main valve seat being arranged in a flow path between the valve inlet and the valve outlet and the main valve element cooperating with the main valve seat.

Such inserts are used in valve arrangements, for example, to provide a sealing between the valve inlet and an actuation device seat so as to prevent leakage of a fluid flow out of the actuation device seat.

Leakage is also undesired from the valve inlet to the valve outlet. To prevent such leaking, usually the valve housing is designed such that it is cast as a massive element, so that the valve seat is the only opening for the fluid flow from the valve inlet to the valve outlet.

However, casting the valve housing in such a way was found to be expensive as a lot of material may be needed to cast the massive valve housing or as sophisticated machining of the valve housing is necessary.

WO 2014/138786 A1 shows a water temperature regulating valve having a valve element which is rotatably mounted in a housing and comprises an opening in a circumferential wall which is surrounded by a gasket element. Within the valve element there are a number of flow paths to connect four ports of a housing in which the valve element is arranged.

EP 1 193 432 A2 shows a radiator valve having an insert which can be rotated to adapt the valve to different flow directions.

EP 2 818 960 A1 shows a valve arrangement having a flow regulating valve and a pressure regulating valve keeping constant a pressure drop over the flow regulating valve.

The objective of the invention is therefore to provide a valve arrangement with a good fluid seal between the inlet and the outlet at low costs.

The problem is solved by the valve arrangement as given in the outset in that the insert comprises an insert foot for stabilizing the insert in the valve housing, which foot is an axial end section of the circumferential surface and the circumferential surface comprises the insert inlet.

Using the gasket element on the insert for providing the fluid seal will result in good fluid sealing at low costs. The machining of the valve housing may become less sophisticated as the gasket element may be arranged such that an interior of the valve housing may be designed with low complexity. Basically only one gasket is necessary to provide for a tight separation of inlet and outlet. The valve housing can still be made of metal and preferred of brass material. To spare as much brass as possible, it is an advantage to as little metal material as possible. Therefore, the housing has huge in- and outlet openings. The insert containing the valve seat and the slanted gasket element section is used to divide flow inlet and flow outlet.

It is preferred that the valve inlet and/or the valve outlet comprise a middle axis which is perpendicular to a middle axis of the insert. This means that they are facing in opposite directions or that they are angled by 90°. This can provide a typical valve geometry. In one embodiment the valve inlet and the valve outlet are arranged collinear. This may be advantageous for a good fluid flow through the valve arrangement. However, in some embodiments the valve inlet and the valve outlet face in directions enclosing a 90° angle between them. This allows to have the fluid flow deflected by 90° from the valve inlet to the valve outlet.

The insert is of a circular cylindrical shape. In some embodiments not being part of the invention though the insert is of a rectangular cylindrical shape. The rectangular cylindrical shape can allow for easy keyed insertion of the insert into the valve housing while a circular cylindrical shape can be beneficial for flow characteristics of the fluid flow.

The insert is of a circular cylindrical shape and comprises a circumferential surface, the circumferential surface comprising an insert inlet and an insert outlet, wherein an insert passage passing through the insert connects the insert inlet to the insert outlet, the gasket element being arranged on a radially outer side of the circumferential surface and cooperating with the valve housing. This is a highly preferred design of the insert as it may allow both good flow sealing and good flow characteristics through the insert. Preferably, the insert inlet and the insert outlet are arranged colinear. Preferably, the insert inlet and the insert outlet are facing in opposite directions. It is most preferred that the valve inlet faces the insert inlet and that the valve outlet faces the insert outlet.

It is preferred that the insert inlet covers more than 30 % of an axial extension of the insert. Preferably, the insert inlet covers more than 40 % of the axial extension of the insert. It is even more preferred, that the insert inlet covers more than 50 % of the axial extension of the insert. Furthermore, it is preferred that the insert inlet covers less than 65 % of the axial extension of the insert. Furthermore, it is preferred that the insert inlet covers less than 55 % of the axial extension of the insert. Most preferably, the insert inlet covers less than 45 % of the axial extension of the insert. Having the insert inlet covering an amount of the axial extension of the insert as given above may allow a good fluid flow through the insert. Furthermore, the amount of material needed for the insert can be reduced when the insert inlet takes a considerably large area of the circumferential surface.

In a preferred embodiment of the invention the insert inlet has a larger flow cross section than the insert outlet. This can allow a flow reduction at the valve outlet. The flow cross section of the insert inlet may be two times larger than the flow cross section of the insert outlet. It is preferred that the flow cross section of the valve inlet is even three times larger, four times larger, or most preferably ten times larger than the flow cross section of the insert outlet. It is preferred that the valve inlet has a rim having a curved shape. It is furthermore preferred, that the insert outlet is of a rectangular shape in a viewing direction perpendicular to the axial extension of the insert.

Preferably, the slanted gasket section covers more than 50 % of the axial extension of the insert. It is more preferred that the slanted gasket section covers more than 60 %, more preferably more than 70 %, more preferably more than 80 %, more preferably more than 90 %, and most preferably 100 % of the axial extension of the insert. In a preferred embodiment the slanted gasket section is of an elliptical shape surrounding at least 50 % of the circumferential surface of the insert. Even more preferred is, that the slanted gasket section surrounds more than 60 %, more preferably more than 80 %, more preferably more than 90 % and most preferably 100 % of the circumferential surface of the insert.

In a preferred embodiment of the invention, the valve housing comprises an actuation device seat for a main valve element actuation device, the insert providing a sealing between the valve inlet and the actuation device seat preventing leakage of the fluid flow out of the actuation device seat. A preferred actuation device is a thermostat device. Such sealings are known. However, using the insert for providing the sealing between the valve inlet and the valve outlet and between the valve inlet and the actuation device seat in a combined way adds a further function to the insert. This may allow for compact design and reduction of the number of parts of the valve arrangement.

It is preferred that the gasket element comprises a gasket section being arranged perpendicular with respect to the direction of the axial extension of the insert. This way a single gasket element can provide both, the fluid seal between the valve inlet and the valve outlet so as to block the fluid flow from the valve inlet to the valve outlet and the sealing between the valve inlet and the actuation device seat preventing leakage of the fluid flow out of the actuation device seat. In some embodiments though, instead of a single gasket with the slanted gasket section and the perpendicular arranged gasket section, two separate gaskets are provided replacing the single one. The gasket section being arranged perpendicular with respect to the direction of the axial extension of the insert preferably is an O-ring. The O-ring is preferably integrally formed with the slanted gasket section.

The gasket element resembles the number 7 in a side view of the insert. This gives a good sealing both between the valve inlet and the valve outlet and between the valve inlet and the actuation device seat. Thus it is preferred that the slanted gasket section is of an elliptical shape and completely surrounds the circumferential surface of the insert. It is furthermore preferred that the perpendicularly arranged gasket section completely surrounds the circumferential surface of the insert. Furthermore, it is preferred that the slanted gasket section and the perpendicular gasket section form an integral part with each other.

Preferably, the insert is made of a first castable material and the gasket element is made of a second castable material. It is highly preferred that the insert is made of a castable or moldable material. Preferably, the gasket element is molded to the insert. Preferably, the insert is made of a plastic material. It is furthermore preferred that the gasket element is made of a rubber material. In general, it is preferred that the rigidity of the insert material is larger than the rigidity of the gasket element. Thus, the weight of the valve arrangement can be low and the form of the insert can easily be predetermined depending on the valve geometry.

Preferably, the insert comprises the main valve seat. This allows providing the main valve seat easily when casting the insert. In case the valve seat wears out it may furthermore be easily replaced together with the insert. In some alternative embodiments of the invention however, the insert comprises a main valve seat mount. Then a removable main valve seat may be mounted to the insert.

It is preferred that the insert comprises a dynamic valve element. This way the valve element may be equipped with a dynamic valve element in addition to the main valve element. This may allow to come to a constant fluid flow for a predetermined opening position of the main valve element even at variable inlet pressure. The insert comprising the dynamic valve element may easily replace an insert without the dynamic valve element so as to easily add the dynamic valve element to the valve arrangement.

Furthermore, the invention is solved by an insert as laid out in the outset suitable for use in the previously described valve arrangement.

This insert allows to have a valve arrangement with a good fluid seal between the valve inlet and the valve outlet at low costs.

In the following, the invention will be described with reference to the attached figures, in which:
- Fig. 1: shows a first embodiment of the valve arrangement according to the invention;
- Fig. 2a+b: shows a valve housing for the valve arrangement according to the first embodiment of the invention;
- Fig. 3: shows a cross section of a first embodiment of the insert for the valve arrangement according to the invention;
- Fig. 4: shows a side view of a first embodiment of the insert for the valve arrangement according to a first embodiment of the invention;
- Fig. 5: shows a perspective top view of the embodiment of the insert shown in Fig. 3 and 4;
- Fig. 6: shows another perspective top view of the embodiment of the insert as shown in the Fig. 3 to 5;
- Fig. 7: shows a perspective bottom view of the embodiment of the insert shown in Fig. 3 to 6;
- Fig. 8: shows a second embodiment of the valve arrangement according to the invention;
- Fig. 9a+b: shows a valve housing of the valve arrangement of the second embodiment of the invention; and
- Fig. 10: shows a third embodiment of the valve arrangement according to the invention.

Reference figures are introduced into the claims and the following detailed description of embodiments of the invention only in order to improve readability of the claims. The reference signs are in no way meant to be limiting.

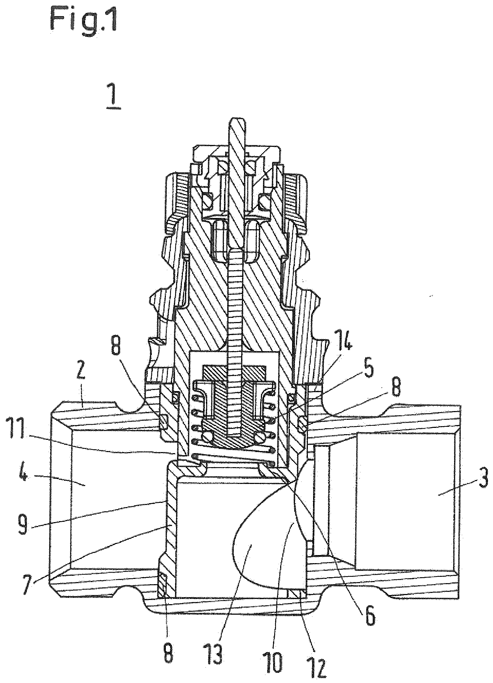

Fig. 1 shows a valve arrangement 1 according to a first embodiment of the invention. The valve arrangement 1 comprises a valve housing 2. Furthermore, the valve arrangement 1 comprises a valve inlet 3 and a valve outlet 4. The valve arrangement 1 comprises a main valve element 5 which cooperates with a main valve seat 6. The valve element 5 is arranged in a flow path connecting the valve inlet 3 to the valve outlet 4 without passing the valve element 5.

The valve housing 2 contains an insert 7. The insert 7 comprises a gasket element 8 so as to provide a fluid seal. The gasket element 8 provides the fluid seal between the valve inlet 3 and the valve outlet 4 so as to block a fluid flow from the valve inlet 3 to the valve outlet 4.

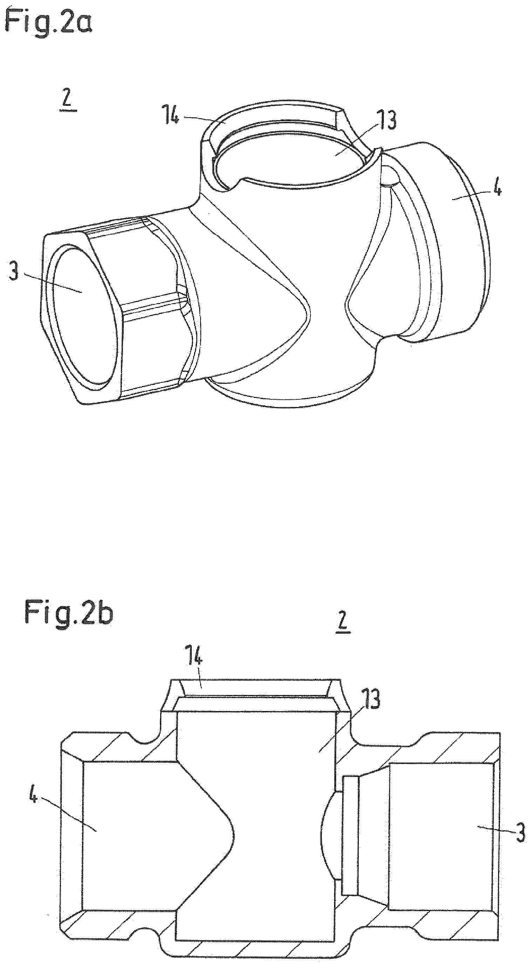

Having the gasket element 8 blocking the fluid flow allows a simplified design of the valve housing 2 as the machining of the valve housing 2 does not need to be so sophisticated anymore, as can be seen in Fig. 2a and Fig. 2b which will be discussed in more detail further below.

As can be seen in Fig. 1, the valve inlet 3 and the valve outlet 4 are facing in opposite directions. Furthermore, the valve inlet 3 and the valve outlet 4 are arranged colinear. This can allow a good fluid flow through the valve arrangement.

The insert 7 comprising the gasket element 8 is, as shown in Fig. 1, of a circular cylindrical shape and comprises a circumferential surface 9, the circumferential surface 9 comprising an insert inlet 10 and an insert outlet 11, wherein an insert passage passing through the insert 7 connects the insert inlet 10 to the insert outlet 11. The gasket element 8 is arranged on a radially outer side of the circumferential surface 9 and cooperating with the valve housing 2. Thus, the gasket element is arranged in a gap between the circumferential surface 9 and the valve housing 2 and therefore prevents an undesired fluid flow through the gap.

As shown in Fig.1, the insert inlet 10 extends over more than 30 % of an axial extension of the insert 7. In fact, the insert inlet 10 extends over about 50 % of the axial extension of the insert 7. Thus, the insert inlet 10 provides a low resistance against fluid entering from the valve inlet 3 and passing towards the valve outlet 4 via the insert inlet 10 and the insert outlet 11. Furthermore, it can be seen that the insert inlet 10 has a larger flow cross section than the insert outlet 11. This results in a good fluid flow control through the insert passage. The insert 7 comprises an insert foot 12 next to the insert inlet 10. It stabilizes the insert 7 in the valve housing 2.

Coming now to Fig. 2, the valve housing 2 will be described in more detail. As depicted, the valve housing 2 comprises an insert mount chamber 13 and an actuation device seat 14. The insert mount chamber is of a circular cylindrical shape and thus adapted to accommodate the insert 7. The valve housing 2 is cast from brass or other metals and afterwards brought to form by machining. On the other hand the insert 7 is cast from plastic. Therefore it is of great advantage using the insert 7 for carrying the gasket element 8. Then designing the interior structure of the valve housing 2 with low detail allows to have a reduced complexity with respect to the insert mount chamber 13. The insert mount chamber 13 is basically of a circular cylindrical shape which is easy to manufacture. Furthermore, as the actuation device seat 14 provides a through hole for inserting the insert into the insert mount chamber 13 it is very easy to place the insert 7 into the insert mount chamber 13.

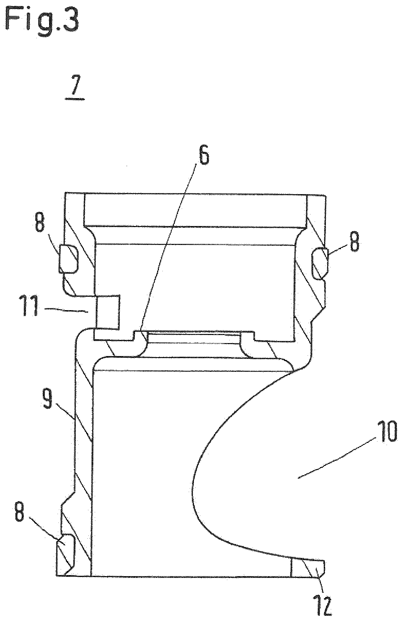

Fig. 3 shows a cross section of a first embodiment of the insert 7 according to the invention and for use in a valve arrangement 1 according to the first embodiment shown in Fig. 1. The insert 7 comprises the main valve seat 6. Thus, the main valve seat 6 needs no longer to be cast or machined into a valve housing 2. Furthermore, the insert 7 comprises an insert foot 12 for stabilizing the insert 7 in the valve housing 2.

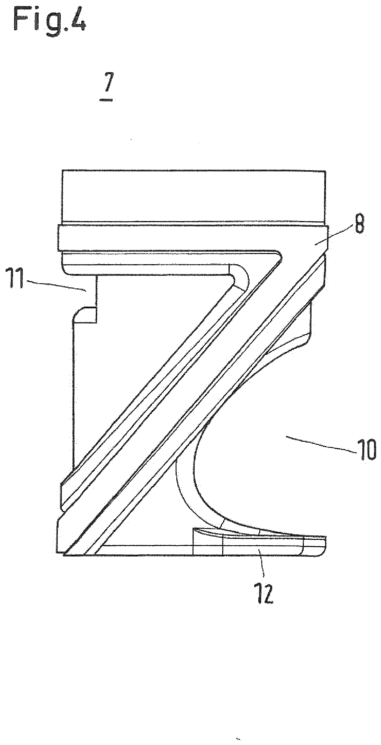

As can be seen in the side view depicted in Fig. 4, the insert 7 comprises the gasket element 8. The gasket element 8 comprises a gasket section being arranged slanted with respect to a direction of the axial extension of the insert 7. Furthermore, the gasket element 8 comprises a gasket section being arranged perpendicular with respect to the direction of the axial extension of the insert 7. In the side view, the gasket element 8 resembles the number seven. Thus, the slanted gasket section provides the fluid seal between the valve inlet 3 and the valve outlet 4 so as to block the fluid flow from the valve inlet 3 to the valve outlet 4 as can be seen in Fig. 1. Furthermore, the gasket section being arranged perpendicular with respect to the direction of the axial extension of the insert 7 provides the sealing between the valve inlet 3 and the actuation device seat 14 preventing leakage of the fluid flow out of the actuation device seat 14, as can also be seen in Fig. 1.

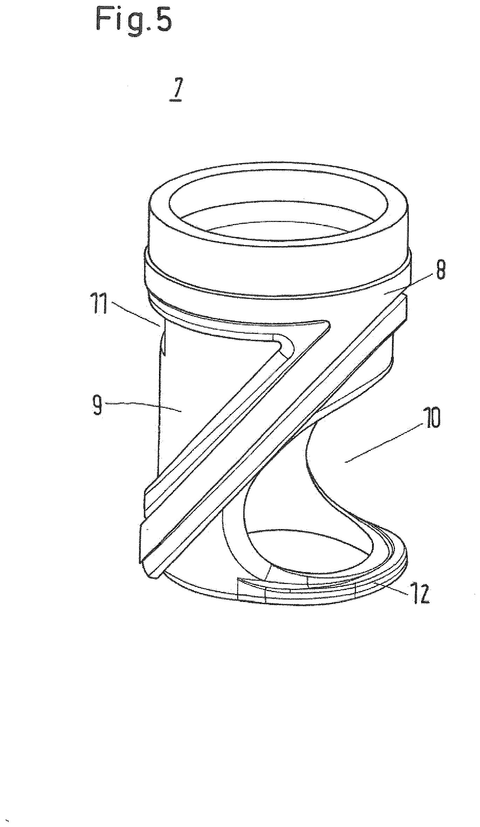

In the perspective top view shown in Fig. 5, it becomes more apparent that the insert inlet 10 has a curved border. Furthermore, it becomes very clear that the insert inlet 10 extends over about 50 % of the axial extension of the insert 7.

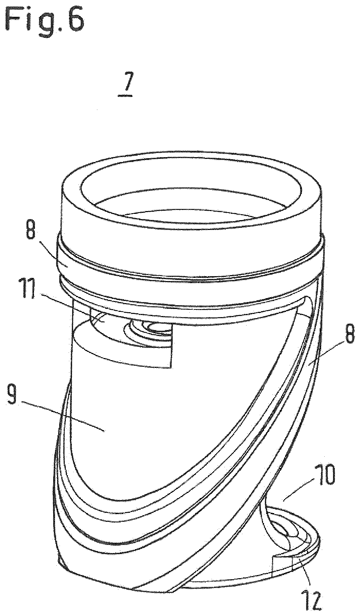

In Fig. 6 then it can be seen that the insert outlet 11 has a smaller flow cross section than the insert inlet 10. As explained earlier, this allows to have a good control over the fluid flow passing through the valve arrangement.

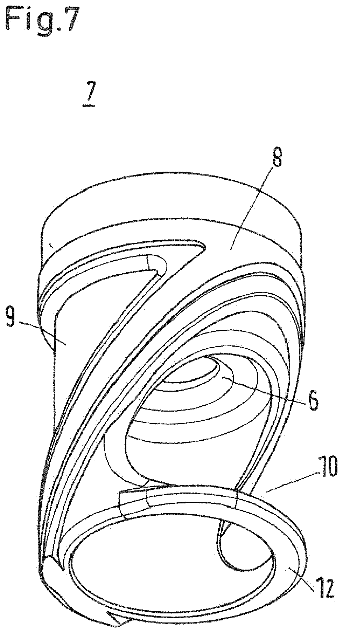

Fig. 7 shows that the insert 7 is basically of a hollow circular cylindrical shape which helps to reduce the material needed for producing the insert 7 and thus reduces producing costs. The slanted gasket section covers about 90 % of the axial extension of the insert 7. In fact, it seals all of the gap between the circumferential surface 9 and the valve housing 2 in order to provide a good fluid seal between the valve inlet 3 and the valve outlet 4. Therefore, the fluid flow can only stream from the valve inlet 3 to the valve outlet 4 via the insert inlet 10 and the insert outlet 11.

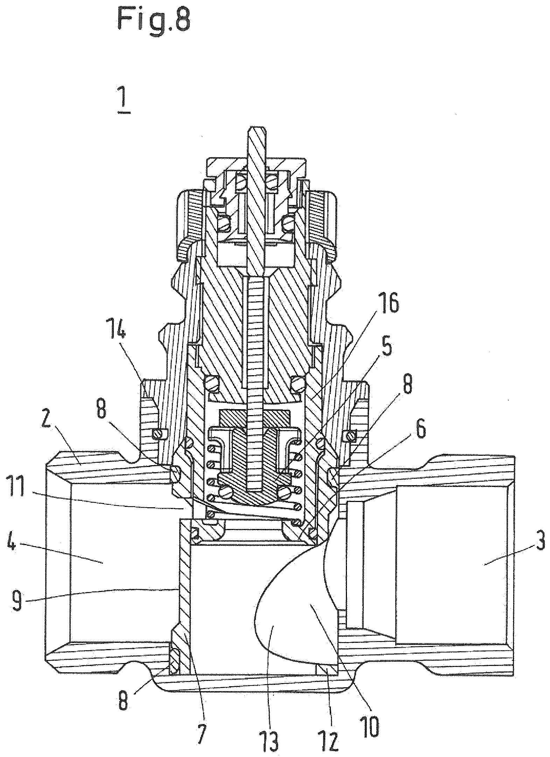

Fig. 8 now shows a second embodiment of the valve arrangement 1 according to the invention. Most details of this embodiment are identical to the features as shown and described in view of Fig. 1. However, in the second embodiment the insert 7 does not comprise the main valve seat 6. The main valve seat 6 is arranged in a presetting element 16 which is rotatably mounted within the insert 7. This allows to have different types of main valve seats and to mount them to the insert 7 depending on the desired usage of the valve arrangement 1.

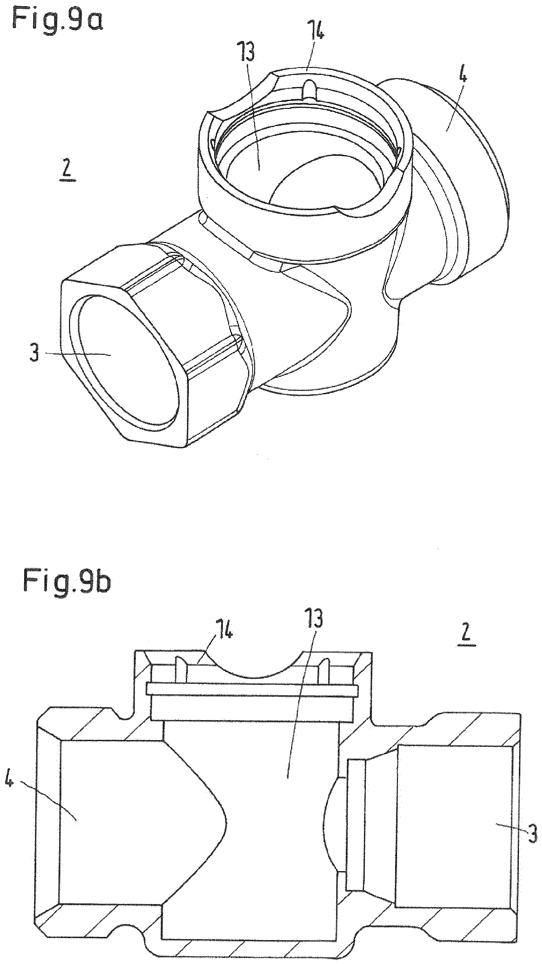

The valve housing 2 used in the second embodiment of the valve arrangement 1 is depicted in Fig. 8 is shown in more detail in Fig. 9a and 9b. The actuation device seat 14 comprises two cutouts rotated by 90° with respect to the axial extension of the valve inlet 3 and the valve outlet 4. As can be seen in Fig. 2a and 2b, for the first embodiment the cutouts are arranged colinear with the valve inlet 3 and the valve outlet 4. However, as in the second embodiment of the valve arrangement 1 the main valve element actuation device has a different housing which also houses the replaceable valve seat 6, it becomes necessary to use a different geometry for the actuation device seat 14. Otherwise, the valve housing 2 in the second embodiment of the valve arrangement 1 is the same as the valve housing 2 in the first embodiment of the valve arrangement 1.

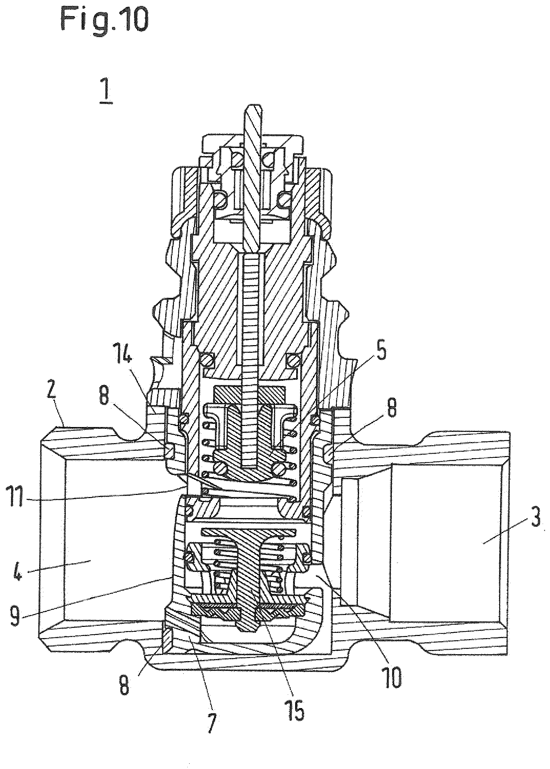

Fig. 10 now shows a third embodiment of the valve arrangement 1 according to the present invention. Most of the details are identical to the first embodiment and the second embodiment shown in Fig. 1 and 8 respectively. However, in the third embodiment, the insert 7 comprises a dynamic valve element 15. This allows for having a constant pressure over the main valve element 5. The dynamic valve element 15 will throttle the flow with rising pressure difference and open the dynamic valve with falling pressure difference so as to keep the pressure over the main valve element 5 at a stable level.

The insert 7 according to the invention as well as the valve arrangement 1 according to the invention provide a solution for coming to an easily implementable fluid seal between the valve inlet 3 and the valve outlet 4. The gasket element 8 is provided on the insert 7. The gasket element 8 allows fluid flow from the valve inlet 3 to the valve outlet 4 only via the insert inlet 10 and the insert outlet 11. The solution allows low production costs for the valve arrangement 1.

The present invention is not limited to the embodiments shown and described. Furthermore, all of the features described in view of the different embodiments may also be combined in any way between different embodiments.

## Claims

1. A valve arrangement (1) comprising a valve housing (2), a valve inlet (3), a valve outlet (4), a main valve element (5) and a main valve seat (6), the main valve seat (6) being arranged in a flow path between the valve inlet (3) and the valve outlet (4) and the main valve element (5) cooperating with the main valve seat (6), the valve housing (2) containing an insert (7) which is of a circular cylindrical shape and comprises a gasket element (8) so as to provide a fluid seal, the insert (7) further comprising an insert outlet (11) and a circumferential surface (9), the circumferential surface (9) comprising an insert inlet (10), wherein an insert passage passing through the insert (7) connects the insert inlet (10) to the insert outlet (11), the gasket element (8) being arranged on a radially outer side of the circumferential surface (9) and cooperating with the valve housing (2), wherein the gasket element (8) comprises a gasket section being arranged slanted with respect to a direction of the axial extension of the insert (7), wherein the insert (7) comprises an insert foot (12) for stabilizing the insert (7) in the valve housing (2), which foot (12) is an axial end section of the circumferential surface,
**characterized in that** the circumferential surface (9) comprises the insert outlet (11).

2. The valve arrangement according to claim 1, **characterized in that** the valve inlet (3) and/or the valve outlet (4) comprise a middle axis which is perpendicular to a middle axis of the insert (7).

3. The valve arrangement according to claim1 or 2, **characterized in that** the insert inlet (10) extends over more than 30% of an axial extension of the insert (7).

4. The valve arrangement according to any of claims 1 to 3, **characterized in that** the insert inlet (10) has a larger flow cross section than the insert outlet (11).

5. The valve arrangement according to any of the claims 1 to 4, **characterized in that** the valve housing (2) comprises an actuation device seat (14) for a main valve element actuation device, the insert (7) providing a sealing between the valve inlet (3) and the actuation device seat (14) preventing leakage of the fluid flow out of the actuation device seat (14).

6. The valve arrangement according to any of the claims 1 to 5, **characterized in that** the gasket element (8) comprises a gasket section being arranged perpendicular with respect to the direction of the axial extension of the insert (7).

7. The valve arrangement according to any of the claims 1 to 6, **characterized in that** the gasket element (8) resembles the number seven in a side view of the insert (7).

8. The valve arrangement according to any of the claims 1 to 7, **characterized in that** the insert (7) is made of a first castable material and the gasket element (8) is made of a second castable material.

9. The valve arrangement according to any of the claims 1 to 8, **characterized in that** the insert (7) comprises the main valve seat (6).

10. The valve arrangement according to any of the claims 1 to 9, **characterized in that** the insert (7) comprises a dynamic valve element (15).

11. An insert (7) for a valve arrangement (1) according to any of claims 1 to 10.

## Patentansprüche

1. Ventilanordnung (1), umfassend ein Ventilgehäuse (2), einen Ventileinlass (3), einen Ventilauslass (4), ein Hauptventilelement (5) und einen Hauptventilsitz (6), wobei der Hauptventilsitz (6) in einem Strömungsweg zwischen dem Ventileinlass (3) und dem Ventilauslass (4) angeordnet ist, und das Hauptventilelement (5) mit dem Hauptventilsitz (6) zusammenwirkt, wobei das Ventilgehäuse (2) einen Einsatz (7) enthält, der eine kreisförmige zylindrische Form aufweist und ein Dichtungselement (8) umfasst, um so eine Fluiddichtung bereitzustellen, wobei der Einsatz (7) ferner einen Einsatzauslass (11) und eine Umfangsfläche (9) umfasst, wobei die Umfangsfläche (9) einen Einsatzeinlass (10) umfasst, wobei ein Einsatzdurchgang, der durch den Einsatz (7) hindurchgeht, den Einsatzeinlass (10) mit dem Einsatzauslass (11) verbindet, wobei das Dichtungselement (8) an einer radial äußeren Seite der Umfangsfläche (9) angeordnet ist und mit dem Ventilgehäuse (2) zusammenwirkt, wobei das Dichtungselement (8) einen Dichtungsabschnitt umfasst, der schräg in Bezug auf eine Richtung der axialen Ausdehnung des Einsatzes (7) angeordnet ist, wobei der Einsatz (7) einen Einsatzfuß (12) umfasst, um den Einsatz (7) in dem Ventilgehäuse (2) zu stabilisieren, wobei der Fuß (12) ein axialer Endabschnitt der Umfangsfläche ist, **dadurch gekennzeichnet, dass** die Umfangsfläche (9) den Einsatzauslass (11) umfasst.

2. Ventilanordnung nach Anspruch 1,
**dadurch gekennzeichnet, dass** der Ventileinlass (3) und/oder der Ventilauslass (4) eine Mittelachse umfassen, die rechtwinklig zu einer Mittelachse des Einsatzes (7) ist.

3. Ventilanordnung nach Anspruch 1 oder 2,
**dadurch gekennzeichnet, dass** sich der Einsatzeinlass (10) über mehr als 30 % einer axialen Ausdehnung des Einsatzes (7) erstreckt.

4. Ventilanordnung nach einem der Ansprüche 1 bis 3,
**dadurch gekennzeichnet, dass** der Einsatzeinlass (10) einen größeren Durchflussquerschnitt aufweist als der Einsatzauslass (11).

5. Ventilanordnung nach einem der Ansprüche 1 bis 4,
**dadurch gekennzeichnet, dass** das Ventilgehäuse (2) einen Betätigungsvorrichtungssitz (14) für eine Hauptventilelement-Betätigungsvorrichtung umfasst, wobei der Einsatz (7) eine Abdichtung zwischen dem Ventileinlass (3) und dem Betätigungsvorrichtungssitz (14) bereitstellt, die ein Lecken der Fluidströmung aus dem Betätigungsvorrichtungssitz (14) verhindert.

6. Ventilanordnung nach einem der Ansprüche 1 bis 5,
**dadurch gekennzeichnet, dass** das Dichtungselement (8) einen Dichtungsabschnitt umfasst, der rechtwinklig in Bezug auf die Richtung der axialen Ausdehnung des Einsatzes (7) angeordnet ist.

7. Ventilanordnung nach einem der Ansprüche 1 bis 6,
**dadurch gekennzeichnet, dass** das Dichtungselement (8) der Zahl sieben in einer Seitenansicht des Einsatzes (7) ähnlich ist.

8. Ventilanordnung nach einem der Ansprüche 1 bis 7,
**dadurch gekennzeichnet, dass** der Einsatz (7) aus einem ersten gießbaren Material hergestellt ist, und das Dichtungselement (8) aus einem zweiten gießbaren Material hergestellt ist.

9. Ventilanordnung nach einem der Ansprüche 1 bis 8,
**dadurch gekennzeichnet, dass** der Einsatz (7) den Hauptventilsitz (6) umfasst.

10. Ventilanordnung nach einem der Ansprüche 1 bis 9,
**dadurch gekennzeichnet, dass** der Einsatz (7) ein dynamisches Ventilelement (15) umfasst.

11. Einsatz (7) für eine Ventilanordnung (1) nach einem der Ansprüche 1 bis 10.

## Revendications

1. Agencement de soupape (1) comprenant un boîtier de soupape (2), une entrée de soupape (3), une sortie de soupape (4), un élément de soupape principal (5) et un siège de soupape principal (6), le siège de soupape principal (6) étant disposé dans un trajet d'écoulement entre l'entrée de soupape (3) et la sortie de soupape (4) et l'élément de soupape principal (5) coopérant avec le siège de soupape principal (6), le boîtier de soupape (2) contenant un insert (7) qui est de forme cylindrique circulaire et comprend un élément de joint d'étanchéité (8) de manière à fournir un joint fluide, l'insert (7) comprenant en outre une sortie d'insert (11) et une surface périphérique (9), la surface périphérique (9) comprenant une entrée d'insert (10),
un passage d'insert traversant l'insert (7) reliant l'entrée d'insert (10) à la sortie d'insert (11), l'élément de joint d'étanchéité (8) étant disposé sur un côté radialement extérieur de la surface circonférentielle (9) et coopérant avec le boîtier de soupape (2),
l'élément de joint d'étanchéité (8) comprenant une section de joint d'étanchéité disposée de manière inclinée par rapport à une direction de l'extension axiale de l'insert (7),
l'insert (7) comprenant une base d'insert (12) pour stabiliser l'insert (7) dans le boîtier de soupape (2), laquelle base (12) est une section d'extrémité axiale de la surface périphérique, **caractérisé en ce que** la surface périphérique (9) comprend la sortie d'insert (11).

2. Agencement de soupape selon la revendication 1, **caractérisé en ce que** l'entrée de soupape (3) et/ou la sortie de soupape (4) présentent un axe central perpendiculaire à un axe central de l'insert (7).

3. Agencement de soupape selon la revendication 1 ou 2, **caractérisé en ce que** l'entrée d'insert (10) s'étend sur plus de 30% d'une extension axiale de l'insert (7).

4. Agencement de soupape selon l'une quelconque des revendications 1 à 3, **caractérisé en ce que** l'entrée d'insert (10) présente une section transversale d'écoulement plus grande que la sortie d'insert (11).

5. Agencement de soupape selon l'une quelconque des revendications 1 à 4, **caractérisé en ce que** le boîtier de soupape (2) comprend un siège de dispositif d'actionnement (14) pour un dispositif d'actionnement d'élément de soupape principal, l'insert (7) assurant une étanchéité entre l'entrée de soupape (3) et le siège de dispositif d'actionnement (14), empêchant la fuite du fluide hors du siège (14).

6. Agencement de soupape selon l'une quelconque des revendications 1 à 5, **caractérisé en ce que** l'élément de joint d'étanchéité (8) comprend une section de joint d'étanchéité disposée perpendiculairement à la direction de l'extension axiale de l'insert (7).

7. Agencement de soupape selon l'une quelconque des revendications 1 à 6, **caractérisé en ce que** l'élément d'étanchéité (8) ressemble au chiffre sept dans une vue latérale de l'insert (7).

8. Agencement de soupape selon l'une quelconque des revendications 1 à 7, **caractérisé en ce que** l'insert (7) est réalisé en un premier matériau coulable et l'élément de joint d'étanchéité (8) est réalisé en un second matériau coulable.

9. Agencement de soupape selon l'une quelconque des revendications 1 à 8, **caractérisé en ce que** l'insert (7) comprend le siège de soupape principal (6).

10. Agencement de soupape selon l'une quelconque des revendications 1 à 9, **caractérisé en ce que** l'insert (7) comprend un élément de soupape dynamique (15).

11. Insert (7) pour un agencement de soupape (1) selon l'une quelconque des revendications 1 à 10.
